# EUROPEAN PATENT APPLICATION

(11) **EP 1 424 432 A1**
(43) Date of publication of application: **02.06.2004**
(21) Application number: 02762794.2
(22) Date of filing: 16.08.2002
(51) Int. Cl.: D06M 15/41

(54) **INORGANIC FIBER MAT AND METHOD FOR PRODUCTION THEREOF**

(30) Priority: 20.08.2001 JP 2001249319
(71) Applicant: Asahi Fiber Glass Company, Limited, Tokyo 101-0045 (JP)
(72) Inventor: MIZUNO, Yoshifumi, c/o Asahi Fiber Glass Co., Ltd, Tokyo 101-0045 (JP)
(74) Representative: Wächtershäuser, Günter, Prof. Dr.
(86) International application number: PCT/JP2002/008329
(87) International publication number: WO 2003/016611

(57) **Abstract**

The present invention provides an inorganic fiber mat with a low aldehyde emission without detriment to various physical properties of inorganic fiber mats and a process for its production. An inorganic fiber mat formed by bonding inorganic fibers together with a binder comprising a phenol resin as a main component, wherein the inorganic fiber mat comprises an aldehyde scavenger and its reaction product in an amount of from 3 to 15 parts by mass in relation to 100 parts by mass of the binder pickup, and the aldehyde scavenger is at least one member selected from the group consisting of the sodium salts, potassium salts and calcium salts of sulfurous acid, acidic sulfurous acid, dithionous acid and disulfurous acid. The aldehyde scavenger is applied between the application of the binder and the curing by polymerization.

## Description

### TECHNICAL FIELD

The present invention relates to an inorganic fiber mat used as a heat insulating material or a sound absorbing material in buildings and a process for producing it. In particular, it relates to an inorganic fiber mat with a low formaldehyde emission and a process for producing it.

### BACKGROUND ART

Inorganic fiber mats made of inorganic fibers such as glass wool or rock wool have been widely used so far as heat insulating materials and sound absorbing materials in industrial or residential buildings. These inorganic fiber mats are generally formed by bonding fibers together with a binder based on a water-soluble phenolic resin.

In water-soluble phenolic resins as the base of the binder, aldehyde crosslinkers such as formaldehyde are usually used. Inorganic fiber mats retain part of these aldehydes which remain unreacted or are bound in the water-soluble phenolic resins after heat curing of the binder. Besides, even after curing, aldehydes are generated through hydrolysis or condensation reaction of the binder. The aldehydes are emitted from the surfaces or edges of finished inorganic fiber mats in very trace amounts.

Aldehyde emissions after completion of building constructions are low enough to do no harm to human bodies. A certain number of inorganic fiber mats are combined in a sealed package for efficient storage and shipping. Sometimes, a greater number of mats are compressed into a sealed package. Aldehydes are emitted from inorganic fiber mats little by little and accumulate in the packages with the lapse of time. The accumulated aldehydes get released when the seal is broken. Therefore, the aldehyde emissions from inorganic fiber mats have to be minimized.

The aldehyde emissions from inorganic fiber mats can be lowered by decreasing the aldehyde content in the water-soluble phenolic resin. A conventional way to decrease unreacted aldehydes is optimization of the reaction temperature, the reaction time and the phenol/aldehyde molar ratio in the reaction during preparation of a water-soluble phenolic resin.

Alternatively, it is also known to store inorganic fiber mats in good ventilation in order to diffuse aldehydes with time.

Furthermore, JP-A-2001-178805 discloses a method of adding aldehyde scavengers in inorganic fiber mats and discloses a heat insulating material made by binding inorganic fibers into mats with a thermosetting formaldehyde resin-based binder which contains a scavenger which immobilizes formaldehyde by reacting with it. As the formaldehyde scavenger, at least one of hydrazide compounds, amino- or imino-containing compounds and urea derivatives is disclosed. It is disclosed that the formaldehyde scavenger is added after heat curing of the binder resin or at the same time as the binder in the form of a mixture with the binder.

USP 5,578,371 discloses a method of decreasing formaldehyde in an emission gas by adding a formaldehyde scavenger to a binder prior to application of the binder to inorganic fibers to allow the scavenger to entrap the formaldehyde generated during the fiber forming and curing steps.

Among the above-mentioned conventional techniques, optimization of the reaction conditions during preparation of a water-soluble phenolic resins has a problem of a poor variety of allowable production conditions which leads to increase in production cost. The optimization of the reactant molar ratio is not easy because it can necessitate increase in the clearance of low molecular weight pyrolyzates of the phenolic resins from the emission gas or cause troubles such as formation of oligomer precipitates from the phenolic resin in the binder mixing tank or the binder supply pipeline.

Gradual aldehyde diffusion by ventilated storage requires large storage space to accommodate inorganic fiber mats with low bulk density and a long storage time, and therefore is economically problematic.

Meanwhile, the method disclosed in JP-A-2001-178805 uses an expensive formaldehyde scavenger which leads to a problem of high production cost. Also, being a carbon-containing compound, the scavenger has a problem with heat stability and can decompose if it is added prior to heat curing of the binder.

If the scavenger is added after heat curing as disclosed in the publication, there is a problem of poor efficiency in aldehyde entrapment, because irrespective of whether the scavenger is added in the form of powder or aqueous solution, the scavenger can not be held sufficiently on the inorganic mat in which the binder has already cured, and is likely to fall off in the subsequent steps. Further, if it is added in a readily scattering powdery form, there is a problem of a poor working environment during manufacture.

Besides, addition of a scavenger in the form of aqueous solution is problematic because the water in it induces hydrolysis of the binder to give too much of extra aldehydes to entrap. Besides, because inorganic fiber mats have to be dried again to evaporate the water, a problem of poor energy efficiency arises. Omission of evaporation of the water results in extra water in the resulting inorganic fiber mat which impairs the heat insulating properties essential to inorganic fiber mats.

On the other hand, when a binder containing a formaldehyde scavenger is applied to inorganic fibers as disclosed in previously mentioned USP5,578,371, because the binder is sprayed onto hot inorganic fibers, the scavenger can thermally decompose or react with the aldehyde generated by thermal decomposition of the binder, partly losing the function as a formaldehyde scavenger. Consequently, this method has a problem that the aldehydes emitted from the resulting inorganic fiber mat obtained after curing by polymerization can not be entrapped sufficiently.

Therefore, the object of the present invention is to provide an inorganic fiber mat which is produced inexpensively and constantly keeps a sufficiently low aldehyde emission without detriment to various properties of inorganic fiber mats.

### DISCLOSURE OF THE INVENTION

To solve the above-mentioned problems, the present invention provides an inorganic fiber mat formed by bonding inorganic fibers together with a binder comprising a phenol resin as a main component, wherein the inorganic fiber mat comprises an aldehyde scavenger and its reaction product in an amount of from 3 to 15 parts by mass in relation to 100 parts by mass of the binder pickup, and the aldehyde scavenger is at least one member selected from the group consisting of the sodium salts, potassium salts and calcium salts of sulfurous acid, acidic sulfurous acid, dithionous acid or disulfurous acid.

According to the present invention, the aldehyde scavenger added in a specific amount to the binder reacts with aldehydes and keeps the aldehyde emission from the inorganic fiber mat below a certain level for a long time. The aldehyde scavenger in the present invention is inexpensive and stable as compared with the organic formaldehyde scavenger used in JP-A-2001-178805 and is almost harmless to human bodies within the range of amount specified in the present invention.

A preferable embodiment of the inorganic fiber mat of the present invention has a formaldehyde emission of at most 0.30 mg/liter measured by the formaldehyde emission test as stipulated by JIS-A5908. According to this embodiment, even if a certain number of inorganic fiber mats are combined into a sealed package, the formaldehyde emission upon breakage of the seal is at a very low level.

The present invention also provides a process for producing an inorganic fiber mat, which comprises spinning inorganic fibers, applying a binder comprising a phenolic resin as a main component to the inorganic fibers, stacking the inorganic fibers bearing the binder on a collection conveyer and curing the binder in a polymerization oven by polymerization, wherein an aldehyde scavenger comprising at least one member selected from the group consisting of the sodium salts, potassium salts and calcium salts of sulfurous acid, acidic sulfurous acid, dithionous acid or disulfurous acid is applied to the inorganic fibers bearing the binder so that from 3 to 15 parts by mass of the aldehyde scavenger is contained in relation to 100 parts by mass of the binder pickup between the application of the binder and the curing by polymerization.

According to the production process, the aldehyde scavenger is applied prior to the curing of the binder by polymerization. Because the aldehyde scavenger is added to the uncured binder, the binder acts as a bonding agent between the aldehyde scavenger and the inorganic fibers to bind them upon curing by polymerization. Therefore, more of the aldehyde scavenger is held while less of the aldehyde scavenger falls off as compared with when the aldehyde scavenger is applied after the heat curing of the binder.

In a preferable embodiment of the process of the present invention, the aldehyde scavenger is applied immediately after the application of the binder in the above-mentioned process. Because it means that the aldehyde scavenger is applied to the inorganic fibers at a very low fiber density while they are being stacked on the conveyer, the aldehyde scavenger is applied to every inorganic fiber during stacking of the inorganic fibers, and therefore, the aldehyde scavenger is distributed evenly in the inorganic fiber mat not only to the surfaces but also to the inside.

Further, in another preferable embodiment of the process of the present invention, the aldehyde scavenger is applied between the stacking of the inorganic fibers and the curing of the binder by polymerization in the above-mentioned process. Because the aldehyde scavenger is applied to a stack of inorganic fibers, more of the aldehyde scavenger can be held.

In still another preferable embodiment of the process of the present invention, the aldehyde scavenger is applied to the stacked inorganic fibers from above and below between the stacking of the inorganic fibers and the curing of the binder by polymerization in the above-mentioned process. It enables the aldehyde scavenger to be applied evener and held in a larger amount.

In still another preferable embodiment of the process of the present invention, the aldehyde scavenger is applied so that the formaldehyde emission is at most 0.30 mg/liter according to the formaldehyde emission test as stipulated by JIS-A5908. According to this embodiment, even if a certain number of inorganic fiber mats are combined in a sealed package, the formaldehyde emission is very low when the seal is broken.

### BRIEF EXPLANATION OF THE DRAWINGS

Fig.1: a schematic diagram showing an embodiment of the process for producing an inorganic fiber mat of the present invention.

Fig. 2: the schematic diagram of another embodiment of the process for producing an inorganic fiber mat of the present invention.

Explanation of the Reference Numerals
1: spinning machine 2. binder feeder
3: inorganic fibers 4a, 4b, 4c, 4d, 5: conveyers
5: polymerization oven 6: inorganic fiber mat
7: cutter 9a, 9b, 9c: aldehyde scavenger feeder

### BEST MODE FOR CARRYING OUT THE INVENTION

First, the inorganic fiber mat of the present invention will be described.

The inorganic fibers used in the present invention are not particularly restricted and may be glass wool, rock wool or the like used in ordinary heat insulating and sound absorbing materials. The inorganic fibers may be spun by various methods such as the super fine method, the blowing method or the rotary method. The density of the inorganic fiber mat may be of an ordinary heat insulating material or sound absorbing material and is preferably within the range of from 5 to 100 kg/m³.

The binder to be applied to the above-mentioned inorganic fibers in the present invention comprises a phenolic resin as a main component like those usually used for glass wool or rock wool. The phenolic resin is obtained by condensation of a phenol and an aldehyde. As the phenol, phenol, cresol, xylenol, recorcin or a modified product thereof may be mentioned. As the aldehyde, in addition to formaldehyde, acetaldehyde, furfural or paraformaldehyde may be mentioned. Part of the phenol may be replaced by a substance which can be condensed with aldehydes such as melamine, methylol melamine, urea or methylol urea. Because it is used in an aqueous binder, the phenolic resin is preferred to be soluble in water.

Further, to the binder, in addition to the phenolic resin base, additives such as urea, melamine, a pH adjuster, a curing accelerator, a silane coupling agent, a colorant and a dustproof agent may be added as the case requires. The binder is prepared by mixing respective components by an ordinary method and adding water to a given concentration.

Now, the aldehyde scavenger used in the present invention will be described.

As the aldehyde scavenger, a substance which reacts with an aldehyde to form a stable compound may be used. In the present invention, as the aldehyde scavenger, at least one member selected from the group consisting of the sodium salts, potassium salts and calcium salts of sulfurous acid (SO₃²⁻), acidic sulfurous acid (hydrogensulfite HSO₃⁻), dithionous acid (S₂O₄²⁻) or disulfurous acid (pyrosulfurous acid, S₂O₅²⁻) may be mentioned. Specifically preferable examples of the aldehyde scavenger include sodium sulfite, potassium sulfite, calcium sulfite, acidic sodium sulfite (hydrogensulfite), acidic potassium sulfite(hydrogensulfite), acidic calcium sulfite(hydrogensulfite), sodium ditionite, potassium ditionite, calcium ditionite, sodium disulfite, potassium disulfite and calcium ditionite.

Among them, as the aldehyde scavenger in the present invention, a salt of acidic sulfurous acid, in particular acidic sodium sulfite, is preferred for high efficiency in aldehyde entrapment.

Because of their large industrial use as raw chemical materials, the above-mentioned aldehyde scavengers are readily available and inexpensive as compared with the previously mentioned hydrazide compounds and amino- or imino-containing compounds and urea derivatives disclosed in JP-A-2001-178805 and commonly used polyphenols such as catechins and tannins. They are almost harmless to human bodies within the range of amount specified in the present invention, as is evident from the fact that sodium sulfite is widely used as a food antioxidant.

The aldehyde scavenger in the present invention is added so that the pickup of the aldehyde scavenger and its reaction product is from 3 to 15 parts by mass in relation to 100 parts by mass of the binder pickup on the inorganic fiber mat. If the aldehyde scavenger is added so that the pickup of the aldehyde scavenger and its reaction product is less than 3 parts by mass, a sufficient aldehyde entrapment can not be expected. If the amount exceeds 15 parts by mass, the scavenger is too much to be held and partly falls off, and the cost of the scavenger increases uneconomically. Particularly, the aldehyde scavenger is preferably added in an amount of from 5 to 15 parts by mass, in particular from 7 to 10. parts by mass, in relation to 100 parts by mass of the binder pickup.

In the present invention, the binder pickup is measured by the ignition loss test or the LOI (Loss of Ignition) test and defined as a loss in weight made by intensely heating a dry specimen of a binder-bearing inorganic fiber mat at about 550°C.

The amount of the aldehyde scavenger and its reaction product means the total amount of the reaction product from the aldehyde scavenger and an aldehyde and the unreacted aldehyde scavenger.

The reaction product is mainly composed of a substance usually obtained by reacting the aldehyde scavenger and an aldehyde, such as sodium 1-hydroxy-methylsulfonate (sodium hydroxymethanesulfonate), as in the case wherein the aldehyde scavenger is sodium hydrogensulfite, and the aldehyde compound is formaldehyde.

In the present invention, the formaldehyde emission is preferably at most 0.30 mg/liter according to the formaldehyde emission test as stipulated by JIS-A5908 (published on June 1, 1994). According to JIS, formaldehyde emissions are rated in three grades, E₀ for from 0.5 mg/liter or less, E₁ for from 0.5 mg/liter to 1.5 mg/liter, and E₂ for from 1.5 mg/liter to 5.0 mg/liter. Grade E₀ is the highest. Therefore, the preferable aldehyde emission in the present invention, at most 0.30 mg/liter, is lower than the upper limit for Grade E₀ and therefore means a very low formaldehyde emission.

The formaldehyde emission is measured according to JIS-A5908. When measurement is done with the inorganic fiber mat of the present invention, which has a thickness of from 10 to 150 mm, the number and size of test specimens are adjusted appropriately so that the total surface area is 1800 cm². Because the formaldehyde accumulated in a package gets released upon breakage of the package, test specimens are prepared after the package of inorganic fiber mats is broken, and after they are placed in a test chamber, a test is started within 10 minutes in accordance with the above-mentioned test method.

Next, the process for producing an inorganic fiber mat of the present invention will be described by reference to the drawings.

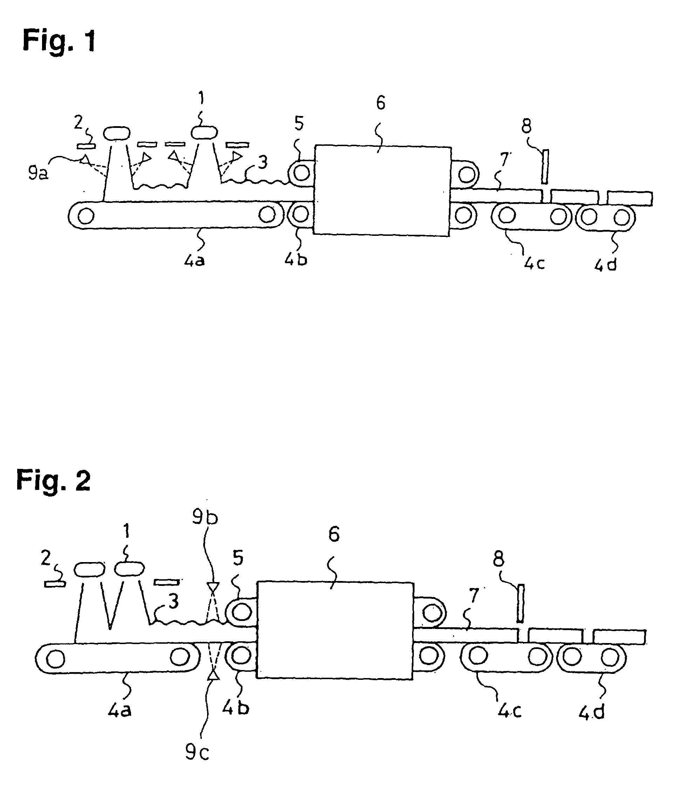

Fig. 1 is a schematic diagram showing an embodiment of the process for producing an inorganic fiber mat of the present invention wherein the aldehyde scavenger is applied immediately after the application of the binder.

According to the process shown in Fig. 1, a binder supplied from a binder feeder 2 is applied to inorganic fibers 3 spewed out of a spinning machine 1, and immediately an aldehyde scavenger is applied from an aldehyde scavenger feeder 9a. Then, the inorganic fibers 3 bearing the binder and the aldehyde scavenger are stacked on a conveyer 4a, carried onto a conveyer 4b, compression-molded with a conveyer 5 to a predetermined thickness while led into a polymerization oven 6 where the binder is thermally cured through polymerization, to give an inorganic fiber mat 7. Now, the respective steps will be described.

First, spinning is done by means of a spinning machine 1 which spews out inorganic fibers such as glass wool. The spinning machine 1 may employ a conventionally known spinning method such as the rotary method, the super fine method and the blowing method without any particular restrictions. A plurality of spinning machines 1 may be provided depending on the density, thickness and crosswise width of the inorganic fiber mat 7 to be produced.

Then, a binder comprising a phenolic resin as a main component supplied from the binder feeder 2 is applied to the inorganic fibers 3 spewed from the spinning machine 1. For the application of the binder, a conventionally known method such as spraying may be employed.

Immediately after the application of the binder, an aldehyde scavenger is applied from the aldehyde scavenger feeder 9a. In the present invention, it is meant by "immediately after the application of the binder" that an aldehyde scavenger is applied while the inorganic fibers are between the binder feeder 2 and the collection conveyer 4a, provided that part of the aldehyde scavenger sprayed from the aldehyde scavenger feeder 9a may be applied directly onto the inorganic fibers 3 on the conveyer 4a.

The conveyer 4a on which the inorganic fibers 3 bearing an uncured binder are stacked is a perforated conveyer which has a suction unit, though diagrammatically omitted, below it, which creates downward suction to stack fibers evenly. The above-mentioned location of the aldehyde scavenger feeder 9a allows efficient application of the aldehyde scavenger, even in a small amount, by using the downward suction.

Besides, because the aldehyde scavenger is applied to the inorganic fibers at a very low fiber density while they are being stacked on the conveyer, the aldehyde scavenger is applied to every inorganic fiber during stacking of the inorganic fibers, and therefore, the aldehyde scavenger is distributed evenly in the inorganic fiber mat not only to the surfaces but also to the inside.

In contrast, when the aldehyde scavenger is added after heat curing of the binder in the polymerization oven 6, because irrespective of whether the scavenger is added in the form of powder or aqueous solution, the scavenger can not be held sufficiently on the inorganic mat 7 in which the binder has already cured, and is likely to fall off in the subsequent steps, the efficiency in aldehyde entrapment is poor. Further, if the aldehyde scavenger is added in the form of aqueous solution, the water in it induces hydrolysis of the binder to give too much of extra aldehydes to entrap.

For the application of the aldehyde scavenger, the aldehyde scavenger may be sprinkled in the form of powder or sprayed in a liquid form after dissolved in water, preferably sprayed in the form of a liquid form by means of a sprayer for even application onto the surfaces of the inorganic fibers. In that case, the concentration of the aldehyde scavenger aqueous solution is preferably from 1 to 20% by mass, particularly preferably from 5 to 15% by mass. A high concentration above 20% by mass is unfavorable, because handling problems such as difficulty in dissolution of the aldehyde scavenger arise at the time of preparation of the aldehyde scavenger aqueous solution. A low concentration below 1% by mass is economically unfavorable because the spray amount has to be increased to secure aldehyde entrapment, and therefore, more heat is required to evaporate extra water in the polymerization oven 6 later. The temperature of the aqueous solution may be ordinary temperature without any particular restriction, but it is preferably within such a temperature range that freezing or precipitation of solids does not occur.

It is possible to bring the pickup of the aldehyde scavenger on the inorganic fibers 3 and the amount of the aldehyde scavenger in relation to the amount of the binder to predetermined values by adjusting at least one of the concentration of the aqueous solution and the spray amount without any change in various production conditions from those conventionally used in production of inorganic fiber mats.

The inorganic fibers 3 bearing the binder and the aldehyde scavenger as above-mentioned are stacked on the conveyer 4a below the spinning machine 1 and go down the line to the conveyer 4b successively, and the stack of the inorganic fibers 3 is compressed to a predetermined thickness and molded into mat with the conveyer 5 which runs above parallel to the conveyer 4b at some distance.

Then, the mat enters the polymerization oven 6 provided around the conveyer 4b, where the binder comprising a water-soluble phenolic resin as a main component on the inorganic fibers thermally cures by polymerization, to give an inorganic fiber mat 7. The resulting inorganic fiber mat 7 is cut with a cutter 8 above the conveyer 4c to a predetermined product size, carried down the conveyer 4d and wrapped and packaged.

Fig. 2 is a schematic diagram showing an embodiment of the process for producing an inorganic fiber mat of the present invention wherein the aldehyde scavenger is applied between the stacking of inorganic fibers and the curing of the binder by polymerization. In the following description, the same reference numerals as in Fig. 1 are used for substantially the same things without explanation of them.

The embodiment shown in Fig. 2 is different from the one shown in Fig. 1 in that the aldehyde scavenger feeder is provided between the conveyer 4a on which inorganic fibers 3 are stacked and the subsequent conveyers 4 and 5 which lead the stack of inorganic fibers into the polymerization oven 6.

First, a binder supplied from the binder feeder 2 is applied to inorganic fibers 3 spewed from the spinning machine 1, and the inorganic fibers 3 are stacked on the conveyer 4a and carried onto the following conveyer 4b, as is the case with the embodiment shown in Fig. 1.

In this case, the aldehyde scavenger is applied onto both sides of the stack of inorganic fibers 3 from an aldehyde scavenger feeder 9b between the conveyer 4a on which the inorganic fibers are stacked and the conveyer 5 and from an aldehyde scavenger feeder 9c in the gap between the conveyer 4a and the conveyer 4b.

Immediately after application of the aldehyde scavenger, the inorganic fibers are compression-molded with the conveyer 5 to a predetermined thickness while led into the polymerization oven 6 where the binder is thermally cured through polymerization, to give an inorganic fiber mat 7, as is the case with the embodiment shown in Fig. 1. The resulting inorganic fiber mat 7 is cut with a cutter 8 above the conveyer 4c to a predetermined product size and then wrapped and packaged.

The bidirectioinal application of the aldehyde scavenger from above and below between the conveyer 4a on which the inorganic fibers 3 are stacked and the subsequent conveyers 4b and 5 which lead the stack of inorganic fibers into the polymerization oven 6 enables the aldehyde scavenger to be applied evener and held more efficiently.

In this embodiment, though an aldehyde scavenger feeder may be provided either above or below, it is preferred that aldehyde scavengers are provided both above and below so that the aldehyde scavenger is applied onto both sides of the stack of inorganic fibers 3 entirely. More than one aldehyde scavenger feeder may be provided depending on the crosswise width of the stack of inorganic fibers 3, as in the embodiment shown in Fig. 1.

In the process of the present invention, though the timing of the application of the aldehyde scavenger to inorganic fibers 3 is not particularly restricted, it is applied preferably as shown in Fig. 1 or Fig. 2, particularly preferably between the stacking of inorganic fibers and the curing of the binder by polymerization as shown in Fig. 2, because the scavenger is held efficiently. The embodiments shown in Fig. 1 and Fig. 2 may be combined, though they may be used separately. When they are combined, the pickup of the aldehyde scavenger can be adjusted to a predetermined value by allotting appropriate shares of the pickup to the respective embodiments.

The inorganic fiber mat 7 obtained by the above-mentioned process of the present invention may be used as a heat insulating material or a sound absorbing material by itself. The inorganic fiber mat 7 also may be combined with a facing material such as paper, a metalized synthetic resin film, a synthetic resin film, a metal foil laminate film, a nonwoven fabric, a woven fabric and their combinations (such as aluminum-lined craft paper and aluminum-lined glass cloth).

### EXAMPLES

Now, the present invention will be described in further details with reference to Examples. The present invention is by no means restricted to those specific Examples. Parts and % are on a mass basis unless otherwise noted.

### EXAMPLE 1

7.5 parts of sodium hydrogensulfite powder as an aldehyde scavenger was dissolved completely in 92.5 parts of deionized water with stirring, and the resulting solution was kept available to be supplied continuously to a spray through a pipeline.

Then, the production process shown in Fig. 2 was followed by spraying the sodium hydrogensulfite aqueous solution (concentration 7.5%) onto both sides of a stack of inorganic fiber mat (glass wool) bearing a binder comprising a water-soluble phenolic resin as a main component on the collection conveyer from above and below the stack of inorganic fibers through the spray after the stack was formed on the collection conveyer and immediately before entry into the polymerization oven. The aqueous solution was applied so that the amount of sodium hydrogensulfite and its reaction product would be from 3.5 parts by mass in relation to 100 parts by mass of the binder pickup on the inorganic fiber mat.

Then, the binder held by the inorganic fiber mat was cured in the polymerization oven to continuously give an inorganic fiber mat with a density of 10 kg/m³ and a thickness of 100 mm.

The inorganic fiber mat was cut into mats of 1370 mm in length and 430 mm in width. 27 of the resulting inorganic fiber mats were combined into a sealed package.

### EXAMPLE 2

Inorganic fiber mats of Example 2 were obtained under the same conditions as in Example 1 except that the concentration of the aldehyde scavenger aqueous solution was changed to 12.5%. The aqueous solution was applied so that the amount of sodium hydrogensulfite and its reaction product would be 7.0 parts by mass in relation to 100 parts by mass of the binder pickup on the inorganic fiber mat.

### COMPARATIVE EXAMPLE 1

Inorganic fiber mats of Comparative Example 1 were obtained under the same conditions as in Example 1 except that the concentration of the aldehyde scavenger aqueous solution was changed to 2.5%. The aqueous solution was applied so that the amount of sodium hydrogensulfite and its reaction product would be 1.8 parts by mass in relation to 100 parts by mass of the binder pickup on the inorganic fiber mat.

### COMPARATIVE EXAMPLE 2

Inorganic fiber mats of Comparative Example 2 were obtained under the same conditions as in Example 1 except that the concentration of the aldehyde scavenger aqueous solution was changed to 5.0%. The aqueous solution was applied so that the amount of sodium hydrogensulfite and its reaction product would be 2.7 parts by mass in relation to 100 parts by mass of the binder pickup on the inorganic fiber mat.

### COMPARATIVE EXAMPLE 3

Inorganic fiber mats of Comparative Example 3 were obtained under the same conditions as in Example 1 except that no aldehyde scavenger was applied.

### COMPARATIVE EXAMPLE 4

5 parts of sodium hydrogensulfite powder as an aldehyde scavenger was dissolved completely in a ready mixed binder solution in relation to 100 parts by mass, on a solid basis, of the binder. Inorganic fiber mats of Comparative Example 4 were obtained under the same conditions as in Example 1 except that the resulting binder was used without the use of the aldehyde scavenger feeder.

### TEST EXAMPLE 1

One hour after the inorganic fiber mats of Examples 1 and 2 and Comparative Examples 1, 2 and 4 were sealed into packages, the packages of these inorganic fiber mats were tested in accordance with the formaldehyde emission test as stipulated by JIS-A5908. For each emission test, three test specimens with a 150 mm-length, a 60 mm-width and a 100-mm thickness were prepared so that the total surface area would be 1800 cm². The results are shown in Table 1 collectively.

**Table 1**

| | Ex. 1 | Ex. 2 | Comp. Ex. 1 | Comp. Ex. 2 | Comp. Ex. 4 |
|---|---|---|---|---|---|
| Concentration of aqueous solution (%) | 7.5 | 12.5 | 2.5 | 5.0 | - |
| Ignition loss of test specimen (%) | 5.4 | 4.6 | 4.0 | 4.9 | 4.8 |
| Density of test specimen (kg/m³ ) | 10.1 | 10.9 | 10.1 | 8.9 | 9. 8 |
| Amount of the scavenger and its reaction product in relation to 100 parts by mass of binder pickup (parts by mass) | 3.5 | 7.0 | 1.8 | 2.7 | 5.0 |
| Formaldehyde emission (mg/liter) | 0.25 | 0.24 | 0.40 | 0.40 | 0.38 |

The results shown in Table 1 indicate that in Examples 1 and 2, the formaldehyde emissions were as low as 0.25 mg/liter and 0.24 mg/liter, respectively, while in Comparative Examples 1 and 2 in which the amount of the sodium hydrogensulfite and its reaction product is outside the range specified in the present invention, the formaldehyde emissions were high at 0.40 mg/liter, respectively.

In Comparative Example 4 in which the aldehyde scavenger was directly added to the binder, the formaldehyde emission was as high as 0.38 mg/liter, and reduction in formaldehyde emission was not sufficient as compared with Example 1 in which the aldehyde scavenger was added immediately before the curing by polymerization.

### TEST EXAMPLE 2

The formaldehyde emissions from the packages of the inorganic fiber mats of Examples 1 and 3 were measured 1 hour, 14 days and 28 days after production to see how the emissions change with storage time. The results are shown in Tables 2 and 3.

**Table 2**

| | Example 1 | | |
|---|---|---|---|
| Time after production | 1 hour | 14 days | 28 days |
| Formaldehyde emission (mg/liter) | 0.25 | 0.22 | 0.24 |

**Table 3**

| | Comparative Example 3 | | |
|---|---|---|---|
| Time after production | 1 hour | 14 days | 28 days |
| Formaldehyde emission (mg/liter) | 0.46 | 0.43 | 0.41 |

The results shown in Tables 2 and 3 indicate that the formaldehyde emission from the mats of Example 1 was equally low 28 days after production and 1 hour after production and always kept at a low level even they were sealed for a long time as compared with that from the mats containing no aldehyde scavenger of Comparative Example 3.

### INDUSTRIAL APPLICABILITY

As described above, the present invention reduces the formaldehyde emission from an inorganic fiber mat without detriment to various physical properties of inorganic fiber mats and therefore, minimizes the formaldehyde emission from a sealed package of inorganic fiber mats when the seal is broken. The inorganic fiber mat of the present invention is suitably used as a heat insulating material or a sound absorbing material for residential or other buildings.

## Claims

1. An inorganic fiber mat formed by bonding inorganic fibers together with a binder comprising a phenol resin as a main component, wherein the inorganic fiber mat comprises an aldehyde scavenger and its reaction product in an amount of from 3 to 15 parts by mass in relation to 100 parts by mass of the binder pickup, and the aldehyde scavenger is at least one member selected from the group consisting of the sodium salts, potassium salts and calcium salts of sulfurous acid, acidic sulfurous acid, dithionous acid or disulfurous acid.

2. The inorganic fiber mat according to Claim 1, wherein the formaldehyde emission is less than 0.30 mg/liter according to the formaldehyde emission test as stipulated by JIS-A5908.

3. The inorganic fibers mat according to Claim 1 or 2, wherein the inorganic fibers are glass wool or rock wool.

4. A process for producing an inorganic fibers mat, which comprises spinning inorganic fibers, applying a binder comprising a phenolic resin as a main component to the inorganic fibers, stacking the inorganic fibers bearing the binder on a collection conveyer and curing the binder in a polymerization oven by polymerization, wherein an aldehyde scavenger comprising at least one member selected from the group consisting of the sodium salts, potassium salts and calcium salts of sulfurous acid, acidic sulfurous acid, dithionous acid or disulfurous acid is applied to the inorganic fibers bearing the binder so that from 3 to 15 parts by mass of the aldehyde scavenger is contained in relation to 100 parts by mass of the binder pickup between the application of the binder and the curing by polymerization.

5. The process for producing an inorganic fiber mat according to Claim 4, wherein the aldehyde scavenger is applied immediately after the application of the binder.

6. The method of producing an inorganic fiber mat according to Claim 4 or 5, wherein the aldehyde scavenger is applied between the stacking of the inorganic fibers and the curing by polymerization.

7. The process for producing an inorganic fiber mat according to Claim 5 or 6, wherein the aldehyde scavenger is applied to the stacked inorganic fibers from above and below.

8. The process for producing an inorganic fiber mat according to any one of Claims 4 to 7, wherein the aldehyde scavenger is applied so that the formaldehyde emission is at most 0.30 mg/liter according to the formaldehyde emission test as stipulated by JIS-A5908.

9. The process for producing an inorganic fiber mat according to any one of Claims 4 to 8, wherein an aqueous solution containing from 1 to 20 mass% of the aldehyde scavenger is sprayed onto the inorganic fibers bearing the binder.
